# EUROPÄISCHE PATENTSCHRIFT

(11) **EP 3 797 942 B1**
(45) Veröffentlichungstag und Bekanntmachung des Hinweises auf die Patenterteilung: **03.07.2024**
(21) Anmeldenummer: 20000328.3
(22) Anmeldetag: 11.09.2020
(51) Int. Cl.: B25J 15/02

(54) **GREIFEINHEITSMODUL MIT SCHWENKSCHUBGELENK**
GRIPPER MODULE WITH A HINGE JOINT
MODULE D'UNITÉ DE PRÉHENSION POURVU D'ARTICULATION À GLISSIÈRE PIVOTANTE

(30) Priorität: 25.09.2019 DE 102019006711
(43) Veröffentlichungstag der Anmeldung: 31.03.2021
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- WO-A1-2017/025076
- WO-A1-2018/003607
- DE-T2- 69 933 952
- JP-A- 2004 276 126
- US-A1- 2019 022 855
- US-B1- 10 569 424

## Beschreibung

Die Erfindung betrifft ein Greifeinheitsmodul mit zwei jeweils um eine Schwenkachse schwenkbar gelagerten, mittels eines antreibbaren Getriebes gekoppelten Greifelementen, wobei die Schwenkachsen parallel zueinander liegen.

Aus der WO 2017/025 076 A1 ist ein derartiges Greifeinheitsmodul bekannt, bei dem die Greifelemente mittels eines Spindelgetriebes angetrieben werden.

Aus der US 2019/0022855 A1 ist eine fest installierte Greifvorrichtung für Großteile bekannt, bei der jeder Greifarm mittels zweier voneinander getrennten Antriebssysteme betätigt wird. Jedes dieser Antriebsysteme bildet mit dem jeweiligen Greifarm eine variable Schwenkachse. Die Drehachsen beider Antriebe liegen hierbei parallel zu von jeweils zwei Schwenkachsen aufgespannten Ebenen.

Die DE 699 33 952 T2 offenbart eine Greifvorrichtung mit schwenkbaren, von einer Zylinder-Kolben-Einheit angetriebenen Greifarmen.

Der vorliegenden Erfindung liegt die Problemstellung zugrunde, ein Greifeinheitsmodul zu entwickeln, das sowohl für Kleinwinkelgreifer als auch für Großwinkelgreifer einsetzbar ist.

Diese Problemstellung wird mit den Merkmalen des Hauptanspruches gelöst. Dazu weist das Getriebe ein rotatorisches Antriebselement mit in Bezug auf die Schwenkachsen ortsfester Drehachse und zwei mit dem Antriebselement in starrem Übersetzungsverhältnis gekoppelte, in einander entgegengesetzte Hubrichtungen linear bewegbare Translationselemente auf. Die Translationselemente sind parallel zu normal zu den Schwenkachsen liegenden Schwenkebenen beider Greifelemente verfahrbar. Außerdem ist jeweils ein Translationselement und jeweils ein Greifelement zumindest mittels eines Schwenkschubgelenks verbunden. Das Getriebe weist ein Zahnstangengetriebe auf, dessen Antriebselement eine Antriebswelle mit einem Ritzel ist und dessen Translationselemente mit dem Ritzel kämmende Zahnstangen sind. Das einzelne Schwenkschubgelenk wird zumindest durch ein Hohlprisma eines Greifelements und einem darin geführten Vollprisma einer Zahnstange gebildet. Das Vollprisma weist einen Mitnahmezapfen auf, der in die gleiche Richtung wie die Verzahnung der Zahnstange orientiert ist.

In dem beschriebenen Greifeinheitsmodul wird eine gleichförmige Bewegung des Antriebselements in eine ungleichförmige Schwenkbewegung der Greifelemente übertagen. Das Greifeinheitsmodul ermöglicht hierbei eine bereichsweise Feinverstellung der Greifelemente. Bei beispielsweise konstanter Antriebsdrehzahl des Antriebselements weisen die Greifelemente im Bereich der Feinverstellung reduzierte Schwenkwinkelgeschwindigkeiten auf. Die momentane Übersetzung zwischen dem Antriebselement und den Greifelementen wird durch die geometrische Ausbildung des Schwenkschubgelenks bestimmt.

Das Greifeinheitsmodul weist eine universelle Schnittstelle zum Anschluss an ein Antriebsmodul auf. Hierzu wird das Antriebselement direkt von dem mit dem Greifeinheitsmodul fest verbundenen Antriebsmodul angetrieben.

Der maximale Öffnungswinkelbereich des Greifeinheitsmoduls kann durch das Antriebsmodul bestimmt werden und/oder mittels eines oder mehrerer Anschläge begrenzt werden.

Weitere Einzelheiten der Erfindung ergeben sich aus den Unteransprüchen und der nachfolgenden Beschreibung schematisch dargestellter Ausführungsformen.
- Figur 1:: Isometrische Ansicht eines Greifeinheitsmoduls;
- Figur 2:: Modul aus Figur 1 bei abgenommenen Gehäuse;
- Figur 3:: Gehäusegrundteil;
- Figur 4:: Antriebswelle;
- Figur 5:: Zahnstange;
- Figur 6:: Greifelement;
- Figur 7:: Abdeckscheibe;

- Figur 8:: Abgedichtetes Greifeinheitsmodul;
- Figur 9:: Modul aus Figur 8 bei abgenommenen Gehäuse;
- Figur 10:: Gehäusegrundteil aus Figur 8;
- Figur 11:: Greifelementscheibe aus Figur 9;
- Figur 12:: Schwenklagerwelle;
- Figur 13:: Greifelementbügel;
- Figur 14:: Zahnstange aus Figur 9;
- Figur 15:: Kulissenstein;

- Figur 16:: Einheit aus Greifeinheitsmodul und Antriebsmodul;
- Figur 17:: Einheit aus Figur 16 bei abgenommenen Gehäuse;

- Figur 18:: Variante eines Greifelements;
- Figur 19:: Schnitt A-A aus Figur 18.

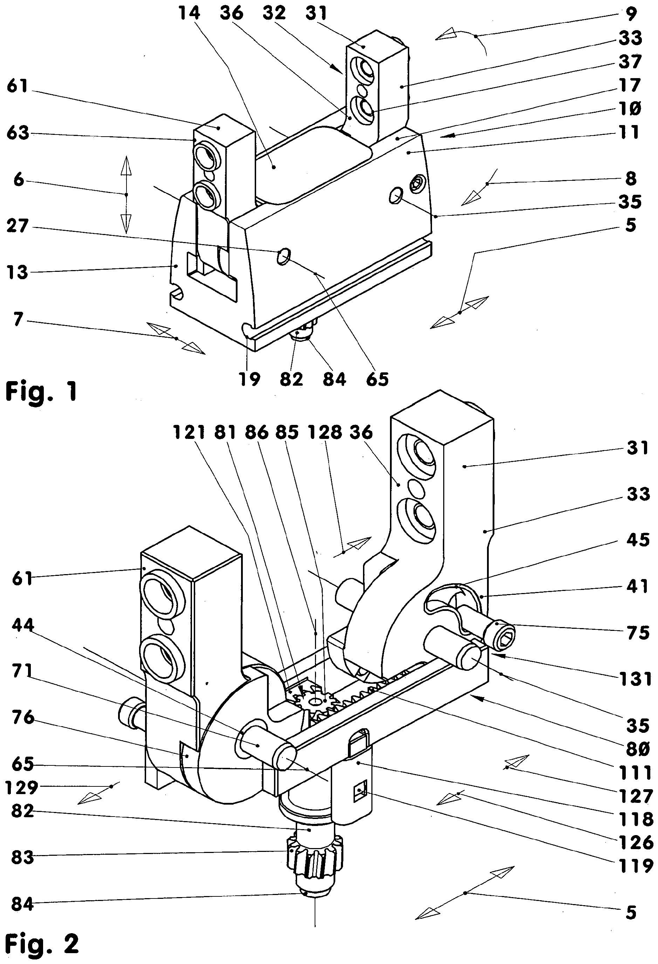

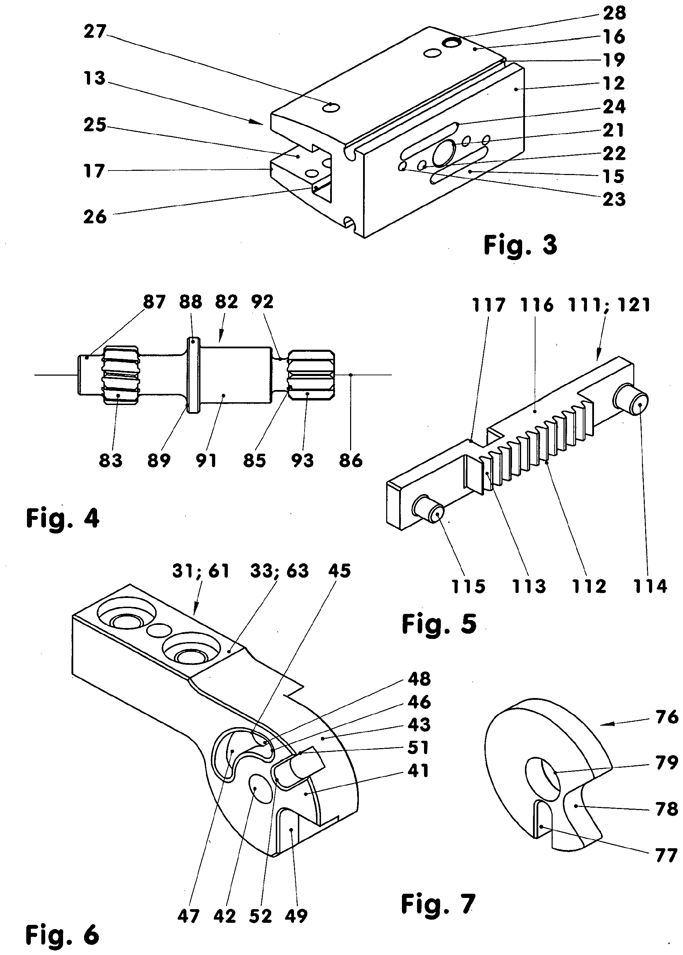

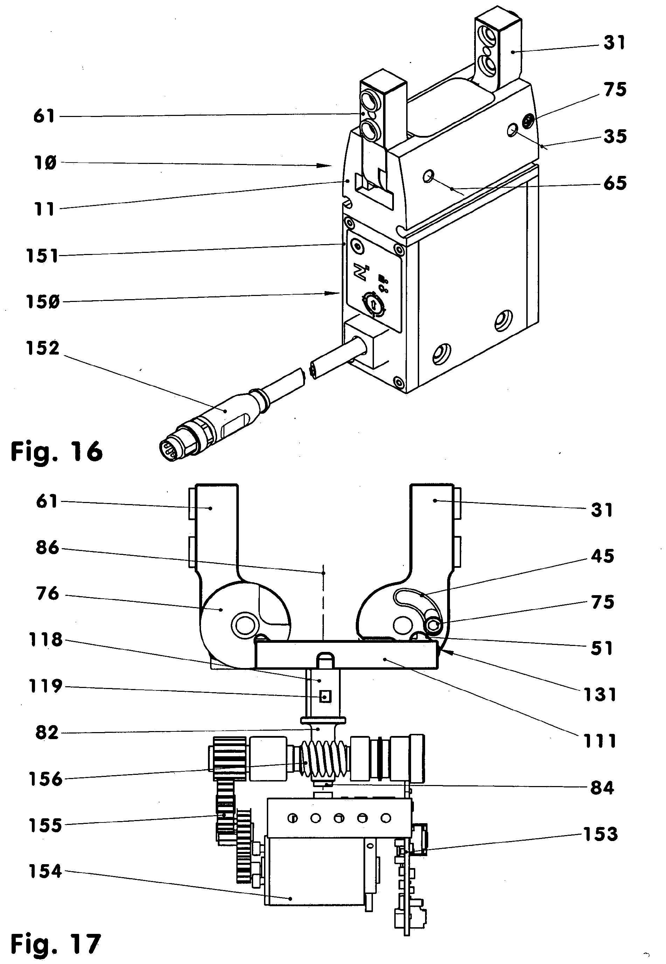

Die Figuren 1 - 7 zeigen ein Greifeinheitsmodul (10). Derartige Greifeinheitsmodule (10) werden eingesetzt, um z.B. Werkstücke automatisch zu greifen und um diese zu positionieren. Das Greifeinheitsmodul (10) kann dabei hängend oder stehend angeordnet sein. In den Figuren sind die Greifeinheitsmodule (10) stehend dargestellt. Das einzelne Greifeinheitsmodul (10) umfasst ein Gehäuse (11), aus dem zwei Greifelemente (31, 61) herausstehen. An der den Greifelementen (31, 61) abgewandten Gehäuseunterseite (12) ragt eine Antriebswelle (82) aus dem Gehäuse (11) heraus. Diese Antriebswelle (82) trägt an ihrem freien Ende eine Schrägverzahnung (83), vgl. Figur 4. Beim Einsatz des Greifeinheitsmoduls (10) kämmt diese Schrägverzahnung (83) z.B. mit einem Abtriebselement eines Antriebsmoduls (150), vgl. Figuren 16 und 17. Die in der Längsrichtung (5) orientierte Länge des dargestellten Greifeinheitsmoduls (10) beträgt beispielsweise 60 Millimeter. In der Höhenrichtung (6) beträgt die Abmessung dieses Greifeinheitsmodul (10) 70 Millimeter und in der Breitenrichtung (7) 26 Millimeter.

Die beiden Greifelemente (31, 61) sind jeweils schwenkbar im Gehäuse (11) gelagert. Die jeweiligen Schwenkachsen (35, 65) sind parallel zueinander angeordnet. Beide Greifelemente (31, 61) sind jeweils zwischen der dargestellten geschlossenen Endlage (32) und einer geöffneten Endlage schwenkbar. In der geschlossenen Endlage (32) des Greifeinheitsmoduls (10) stehen die Greifbackenhalter (33, 63) der Greifelemente (31, 61) beispielsweise parallel zueinander. In der geöffneten Position sind beide Greifelemente (31, 61) jeweils nach außen geschwenkt. Für jedes Greifelement (31, 61) beträgt der maximale Schwenkwinkelbereich beispielsweise 90 Grad aus der geschlossenen Endlage (32) heraus. Der Öffnungswinkelbereich des Greifeinheitsmoduls (10) beträgt damit das Doppelte dieses Schwenkwinkelbereichs.

Die beiden Greifelemente (31, 61) sind in diesem Ausführungsbeispiel mittels zweier Zahnstangen (111, 121) und der Antriebswelle (82) miteinander gekoppelt. Beide Zahnstangen (111, 121) sind im Gehäuse (11) in der Längsrichtung (5) des Greifeinheitsmoduls (10) verschiebbar gelagert. Die Zahnstangen (111, 121) kämmen mit einem Ritzel (85), das Teil der Antriebswelle (82) ist. Die Drehachse (86) der Antriebswelle (82) ist in Bezug auf die Schwenkachsen (35, 65) der Greifelemente (31, 61) ortsfest.

Das Gehäuse (11) besteht in diesem Ausführungsbeispiel aus einem Gehäusegrundteil (13) und einem Gehäusedeckel (14). Das Gehäusegrundteil (13) ist in,der Figur 3 dargestellt. Es hat die Gestalt eines u-förmigen Kanals mit einer Grundplatte (15) und zwei an dieser angrenzenden Seitenplatten (16). An der der Grundplatte (15) abgewandten Oberseite (17) ist der Gehäusedeckel (14) befestigt.

An der Außenseite beider Seitenplatten (16) ist jeweils eine in der Längsrichtung (5) orientierte Aufnahmenut (19) eingeprägt. In diese Aufnahmenuten (19) können beispielsweise Magnetfeldsensoren eingesetzt werden.

Die Grundplatte (15) hat eine zentrale Durchgangsbohrung (21), zwei Befestigungsbohrungen (22), zwei Zentriereinsenkungen (23) und zwei in der Längsrichtung (5) orientierte Langlöcher (24). Durch die Durchgangsbohrung (21) ist die Antriebswelle (82) hindurchgeführt. Die Befestigungsbohrungen (22) dienen zur Befestigung eines Antriebsmoduls (150), vgl. Figur 16, am Greifeinheitsmodul (10), beispielsweise mittels Schrauben. Diese beiden Module (10, 150) werden z.B. mittels in die Zentriereinsenkungen (23) eingesetzten Zentrierstiften aneinander zentriert. Durch die Langlöcher (24) hindurch sind beispielsweise die Positionen von mit den Zahnstangen (111, 121) geführten Magneten (119) überwachbar.

Das Gehäusegrundteil (13) ist z.B. achsensymmetrisch in Bezug auf die normal zur Grundplatte (15) orientierte Mittellinie der Durchgangsbohrung (21) ausgebildet. In der Draufsicht auf das Gehäusegrundteil (13) ist dies eine Punktsymmetrie. In die Innenwandung (25) jeder beiden Seitenplatten (16) ist eine in der Längsrichtung (5) orientierte, durchgehende Führungsnut (26) eingeprägt. Jede der Seitenplatten (16) hat außerdem zwei symmetrisch zu einer vertikalen Mittenquerebene des Gehäusegrundteils (13) angeordnete Schwenklagerdurchbrüche (27). Die einander gegenüberliegenden Schwenklagerdurchbrüche (27) fluchten miteinander. Außerhalb der Schwenklagerdurchbrüche (27) hat jede Seitenplatte (16) jeweils einen Gewindedurchbruch (28).

Die Figur 4 zeigt die Antriebswelle (82). Diese hat an ihrem unteren Ende einen Aufnahmebund (87), in dem in den Darstellungen der Figuren 1 und 2 ein Magnetsensor (84) sitzt. An den Aufnahmebund (87) schließt die Schrägverzahnung (83) an. Diese hat beispielsweise 12 Zähne und einen Stirnschnittmodul von 0,5 Millimetern. Der Schrägungswinkel der Verzahnung beträgt im Ausführungsbeispiel 5 Grad.

Annährend mittig hat die Antriebswelle (82) einen Auflagebund (88). Dieser ist mittels zweier planparalleler Bundflächen (89) begrenzt. Oberhalb des Auflagebundes (88) ist ein zylindrischer Führungsbund (91) ausgebildet. Der Durchmesser des Führungsbundes (91) beträgt im Ausführungsbeispiel 75 % des Durchmessers des Auflagebundes (88).

Oberhalb des Führungsbundes (91) hat die Antriebswelle (82) einen Freistich (92), der den Führungsbund (91) von dem Ritzel (85) beabstandet. Das Ritzel (85) hat im Ausführungsbeispiel eine Gradverzahnung (93) mit zehn Zähnen. Der Modul der Gradverzahnung (93) entspricht beispielsweise dem Stirn-- schnittmodul der Schrägverzahnung (83).

In der Figur 5 ist eine Zahnstange (111; 121) dargestellt. Beide Zahnstangen (111, 121) des Greifeinheitsmoduls (10) sind identisch zueinander ausgebildet. Die einzelne Zahnstange (111; 121) hat im zentralen Bereich eine gerade Verzahnung (112). Diese hat beispielsweise 12 Zähne (113). Der Verzahnungsmodul entspricht dem Modul des Ritzels (85).

An ihren beiden Enden trägt die dargestellte Zahnstange (111; 121) jeweils einen Mitnahmezapfen (114; 115). Der einzelne Mitnahmezapfen (114; 115) hat die Gestalt eines zylindrischen Zapfens. Er ist in die gleiche Richtung wie die Verzahnung (112) orientiert.

An der hier nach oben zeigenden Unterseite (116) der Zahnstange (111; 121) ist eine Aussparung (117) eingeprägt, In dieser sitzt bei montiertem Greifeinheitsmodul (10) ein den Magneten (119) tragender Magnethalter (118), vgl. Figur 2.

Die Figur 6 zeigt ein Greifelement (31; 61). Beide Greifelemente (31, 61) des Greifeinheitsmoduls (10) sind im Ausführungsbeispiel identisch zueinander ausgebildet. Das einzelne Greifelement (31; 61) hat in diesem Ausführungsbeispiel eine Greifelementscheibe (41) und einen an diesen angeformten Greifbackenhalter (33; 63). Der Greifbackenhalter (33; 63) ist hierbei z.B. tangential zur Greifelementscheibe (41) angeordnet. Die Befestigungsseite (36) für die Greifbacken ist hierbei an der Innenseite des Greifbackenhalters (33; 63) angeordnet.

Die Greifelementscheibe (41) hat eine zentrale Schwenkbolzenaufnahme (42), in dem bei montiertem Greifeinheitsmodul (10) ein Schwenklagerbolzen (71) oder eine Schwenklagerwelle sitzt. Die geometrische Mittellinie der z.B. zylindrischen Schwenkbolzenaufnahme (42) bildet die Schwenkachse (35; 65) des jeweiligen Greifelements (31; 61). Die Schwenkbolzenaufnahme (42) ist einseitig in einer Lagerbuchse (44) fortgeführt.

Auf der der Lagerbuchse (44) abgewandten Seite hat die Greifelementscheibe (41) eine zur jeweiligen Schwenkachse (35; 65) konzentrische Anschlagnut (45). Der von der Anschlagnut (45) überdeckte Winkelbereich entspricht dem Schwenkwinkelbereich des jeweiligen Greifelements (31; 61). Im Ausführungsbeispiel beträgt dieser Schwenkwinkelbereich 90 Grad. Der Nutgrund (47) der Anschlagnut (45) hat im Ausführungsbeispiel einen Nutabsatz (48). Dieser Nutabsatz (48) überdeckt z.B. einen Winkelbereich von z.B. 23 Grad. Der Nutabsatz (48) grenzt an das dem Greifbackenhalter (33; 63) abgewandte Ende (46) der Anschlagnut (45) an.

Der Nutgrund (47) kann mehrere, z.B. gestuft angeordnete Nutabsätze (48) aufweisen. Es ist auch denkbar, den Nutgrund (47) in der Umfangsrichtung um die jeweilige Schwenkachse (35; 65) stufenlos geneigt auszubilden. In beiden Fällen nimmt die Tiefe der Anschlagnut (45) beispielsweise von dem genannten Ende (46) der Anschlagnut (45) aus ab.

Die Greifelementscheibe (41) hat weiterhin eine Mitnahmenut (51). In der Darstellung der Figur 6 verläuft diese auf der gleichen Seite wie die Anschlagnut (45). Sie ist beispielsweise radial von der Mantelfläche (43) in Richtung der jeweiligen Schwenkachse (35; 65) orientiert. Die Mitnahmenut (51) hat im Ausführungsbeispiel eine konstante Tiefe und eine konstante Breite. Die in radialer Richtung der Greifelementscheibe (41) orientierte Länge der z.B. geraden Mitnahmenut (51) beträgt z.B. die Hälfte des Radius der Greifelementscheibe (41). Im Ausführungsbeispiel schließt die Richtung der an der Mantelfläche (43) offenen Mitnahmenut (51) mit dem Greifbackenhalter (33; 63) einen Winkel von 135 Grad ein.

In dem der Anschlagnut (45) abgewandten Bereich der Greifelementscheibe (41) hat diese eine Zahnstangenaussparung (49). Abhängig von der Winkelstellung des jeweiligen Greifelements (31; 61) taucht die Verzahnung (112) der Zahnstange (111; 121) in die Zahnstangenaussparung (49) ein.

Der einzelne Greifbackenhalter (33; 63) hat im Ausführungsbeispiel einen quaderförmigen Querschnitt. Er hat zwei Querbohrungen (37), die normal zur Befestigungsseite (36) orientiert sind. Zum Einsatz des Greifeinheitsmoduls (10) wird z.B. jeweils eine Greifbacke auf je einen Greifbackenhalter (33; 63) aufgesetzt und mittels die Querbohrungen (37) durchdringender Schrauben befestigt.

In der Figur 7 ist eine Abdeckscheibe (76) dargestellt. Diese flache Scheibe hat beispielsweise die Außenkontur der Greifelementscheibe (41). Sie hat eine Aufnahmenut (77), deren Abmessungen den Abmessungen der Mitnahmenut (51) entsprechen. Weiterhin weist sie eine Zahnstangenausnehmung (78) auf, die so ausgebildet ist wie die Zahnstangenausnehmung (49) der Greifelementscheibe (41). Der Durchmesser der zentralen Durchgangsbohrung (79) ist geringfügig größer als der Außendurchmesser der Lagerbuchse (44). Die Abdeckscheibe (76) ist damit frei drehbar auf der Lagerbuchse (44) lagerbar.

Beim Zusammenbau des Greifeinheitsmoduls (10) werden beispielsweise zunächst die Abdeckscheiben (76) auf die Lagerbuchsen (44) der Greifelementscheiben (41) aufgesetzt. Die Befestigungsseiten (36) der Greifelemente (31, 61) zeigen z.B. zueinander. Auf beiden Seiten der Greifelemente (31, 36) werden die Zahnstangen (111, 121) aufgesetzt, wobei die Verzahnungen (112) zueinander zeigen. Ein erster Mitnahmezapfen (114) jeder Zahnstange (111; 121) wird jeweils in eine Mitnahmenut (51) einer Greifelementscheibe (41) eingesetzt. Der jeweilige zweite Mitnahmezapfen (115) wird in die Aufnahmenut (77) der Abdeckscheibe (76) am jeweiligen anderen Greifelement (61; 31) eingesteckt.

In die Grundplatte (15) des Gehäuses (11) werden z.B. zwei Befestigungsschrauben eingesetzt, bevor die oben beschriebene Vormontagegruppe beispielsweise von einer Stirnseite aus in das Gehäusegrundteil (13) eingeschoben wird. Die Zahnstangen (111, 121) werden hierbei in den Führungsnuten (26) geführt. Anschließend werden die Schwenklagerbolzen (71) durch die Schwenklagerdurchbrüche (27) des Gehäuses (11) und die Schwenkbolzenaufnahmen (42) der Greifelemente (31; 61) hindurchgeführt und gesichert. Von der Gehäuseunterseite (12) her werden durch die Langlöcher (24) hindurch die Magnethalter (118) mit den darin eingesetzten Magneten (119) in die Aussparungen (117) der Zahnstangen (111; 121) eingesetzt und gesichert.

Nun werden die Greifelemente (31, 61) beispielsweise so um ihre jeweiligen Schwenkachsen (35; 65) geschwenkt und temporär gesichert, dass die Befestigungsseiten (36) parallel zueinander ausgerichtet sind. Beispielsweise kann an jeder Gehäuseseite eine Anschlagschraube (75) in den Gewindedurchbruch (28) eingeschraubt werden. Diese Anschlagschraube (75) wird beispielsweise soweit eingeschraubt, bis sie wenige Zehntel Millimeter Abstand vom Nutgrund (47) hat. In dieser Lage wird die Anschlagschraube (75) gesichert. Gegebenenfalls wird nur eine Anschlagschraube (75) am Greifeinheitsmodul (10) eingesetzt.

Von der Gehäuseunterseite (12) aus kann die Antriebswelle (82) durch die zentrale Durchgangsbohrung (21) hindurch eingeschoben werden, bis der Auflagebund (88) an der Gehäuseunterseite (12) anliegt. Das Ritzel (85) kämmt nun mit beiden Zahnstangen (111, 121). Nach dem Einsetzen von z.B. zwei Zentrierbolzen an der Gehäuseunterseite (12) kann das Greifeinheitsmodul (10) so auf ein Antriebsmodul (150) aufgesetzt werden, dass die Antriebswelle (82) mittels des Antriebsmoduls (150) antreibbar ist. Nach dem Anziehen der Befestigungsschrauben kann z.B. abschließend der Gehäusedeckel (14) am Gehäusegrundteil (13) befestigt werden. Der Zusammenbau kann auch in anderer Reihenfolge erfolgen.

Im zusammengebauten Greifeinheitsmodul (10) ist die Antriebswelle (82) mittels eines Getriebes (80) mit beiden Greifelementen (31, 61) gekoppelt. Ein Verdrehen der Antriebswelle (82) bewirkt ein lineares Verschieben beider z.B. gleitgelagerten Zahnstangen (111, 121) im Gehäuse (10) in entgegengesetzte Richtungen. Das Ritzel (85) der Antriebswelle (82) und die beiden Zahnstangen (111, 121) bilden im Ausführungsbeispiel als Teil des Getriebes (80) ein Zahnstangengetriebe (81) mit Gradverzahnung. Sowohl das Ritzel (85) als auch die Zahnstangen (111, 121) können schrägverzahnt ausgebildet sein. Im gleichförmig übersetzenden Zahnstangengetriebe (81) bildet die Antriebswelle (82) ein rotatorisch antreibbares Antriebselement (82). Die zwei Zahnstangen (111; 121) bilden zwei, in entgegengesetzte Hubrichtungen (126, 128; 127, 129) linear bewegbare Translationselemente (111; 121). Anstatt des Zahnstangengetriebes (81) kann auch ein Schneckengetriebe mit zwei translatorisch bewegten Schnecken, ein Schraubgetriebe mit zwei linear in entgegengesetzte Richtungen verfahrbaren Schrauben, ein Spindelgetriebe, etc. eingesetzt werden. Die Hubrichtungen (126, 127, 128, 129) sind in der Längsrichtung (5) orientiert.

In den Darstellungen der Figuren 1 und 2 wird in einer Ansicht von oben bei einem Drehen der Antriebswelle (82) im Uhrzeigersinn die in der Figur 2 vorne dargestellte Zahnstange (111) nach links, also in der Öffnungshubrichtung (126) verschoben. Die in dieser Figur 2 hintere Zahnstange (121) wird nach rechts, also in der Öffnungshubrichtung (128), verschoben. Beide Zahnstangen (111, 121) werden hierbei parallel zu den Schwenkebenen der Greifelemente (31, 61) verschoben. Die jeweilige Schwenkebene eines Greifelements (31; 61) steht jeweils normal zu der Schwenkachse (35; 65) dieses Greifelements (31; 61).

Der im jeweiligen Greifelement (31; 61) sitzende Mitnahmezapfen (114) bildet zusammen mit der Mitnahmenut (51) ein das Greifelement (31; 61) und die Zahnstange (111; 121) verbindendes Schwenkschubgelenk (131). Dieses ist im Ausführungsbeispiel eine gerade Schubschleife. Im Schwenkschubgelenk (131) bildet der Mitnahmezapfen (114) ein Vollprisma (114) oder Teil eines z.B. mehrteiligen Vollprismas (114, 122), das in der ein Hohlprisma (51) bildenden Mitnahmenut (51) geführt ist und schwenkbar gelagert ist. Die Mitnahmenut (51) kann auch gebogen ausgeführt sein. Der Bogen kann hierbei z.B. einen konstanten Radius, einen zumindest bereichsweise zunehmenden oder zumindest bereichsweise abnehmenden Radius haben. Auch ist es denkbar, das Vollprisma des Schwenkschubgelenks (131) am Greifelement (31; 61) und das Hohlprisma an der Zahnstange (111; 121) anzuordnen. Das Schwenkschubgelenk (131) ist im gesamten Schwenkwinkelbereich beabstandet zur jeweiligen Schwenkachse (35; 65). Bei einer Bewegung eines Translationselements (111; 121) in einer der Hubrichtungen (126, 128; 127, 129) wirkt dieses im gesamten Schwenkwinkelbereich totpunktfrei mit einem Hebelarm auf das Greifelement (31; 61).

Beim linearen Verfahren der Zahnstangen (111; 121) in den Öffnungshubrichtungen (126, 128) werden beide z.B. gleitgelagerte Greifelemente (31, 61) nach außen geschwenkt. Bei diesem Schwenken wird die Bewegung der einzelnen Zahnstange (111; 121) spielfrei auf das mit dieser gekoppelte Greifelement (31; 61) übertragen. Die Greifelemente (31, 61) öffnen. Der von den Greifelementen (31, 61) eingeschlossene Winkel vergrößert sich. Beim weiteren Verfahren der Zahnstangen (111, 121) schwenken die Greifelemente (31, 61) weiter auf, bis beispielsweise die Anschlagschraube (75) an das dem Greifbackenhalter (33; 63) naheliegendem Ende der Anschlagnut (45) oder des Nutabsatzes (48) anschlägt. Der Schwenkwinkelbereich des einzelnen Greifelements (31; 61) von der in den Figuren 1 und 2 dargestellten geschlossenen Endlage (32) bis in die geöffnete Stellung kann damit mittels der Anschlagschraube (75) oder Anschlagschrauben (75) eingestellt werden. Dieser maximale Schwenkwinkelbereich liegt zwischen 10 Grad und 90 Grad. Der maximale Öffnungswinkel der Greifelemente (31, 61) beträgt das Doppelte des gewählten oder eingestellten maximalen Schwenkwinkelbereichs.

Die einzelne Zahnstange (111; 121) schwenkt beim translatorischen Verfahren auch die mit ihr verbundene Abdeckscheibe (76). Sowohl die mit der Zahnstange (111; 121) verbundene Abdeckscheibe (76) als auch das mit dieser Zahnstange (111; 121) verbundene Greifelement (31; 61) schwenken relativ zum Gehäuse (11) im gleichen Schwenksinn und um den gleichen Schwenkwinkel. Damit wird die Abdeckscheibe (76) relativ zu dem sie tragenden Greifelement (31; 61) um den doppelten Betrag des Schwenkwinkels geschwenkt. Die Abdeckscheibe (76) verhindert beispielsweise dabei das Eindringen von Verschmutzungen in den Bereich der Lagerung der Greifelemente (31, 61).

Zusammen mit den Zahnstangen (111, 121) werden die Magnete (119) verfahren. Mittels eines beispielsweise im Antriebsmodul (150) angeordneten Magnetfeldsensor kann die Lage der einzelnen Zahnstange (111; 121) relativ zum Gehäuse (11) ermittelt werden. Aus der Lage der einzelnen Zahnstange (111; 121) und ihrer Hubrichtung ergibt sich beispielsweise die genaue Winkellage des mit dieser Zahnstange (111; 121) verbundenen Greifelements (31; 61). Die beiden Magnete (119) sind hierbei z.B. in Bezug auf den Öffnungswinkel des Greifeinheitsmoduls (10) bei identischen Greifelementen (31; 61) redundant zueinander angeordnet.

Zum Schließen der Greifelemente (31, 61) wird die Antriebswelle (82) in der Gegenrichtung gedreht. Beispielsweise wird das Ritzel (85) in einer Ansicht von oben auf die in der Figur 2 dargestellte Vorrichtung entgegen dem Uhrzeigersinn gedreht. Die in dieser Figur 2 vorne liegende Zahnstange (111) wird nach rechts, also in der Schließhubrichtung (127) bewegt, die hintere Zahnstange (121) in der Schließhubrichtung (129) nach links. Der jeweilige Mitnahmezapfen (114) läuft entlang einer Sehne eines normal zur Schwenkachse (35; 65) orientierten Kreises. Hierbei wird - bei z.B. konstanter Drehzahl der Antriebswelle (82) - die Winkelgeschwindigkeit der Schwenkbewegung des einzelnen Greifelements (31; 61) erhöht, bis die Mitnahmenut (51) normal zur Längsrichtung (5) orientiert ist. Anschließend nimmt - bei weiterhin konstanter Drehzahl der Antriebswelle (82) - die Winkelgeschwindigkeit des einzelnen Greifelements (31; 61) wieder ab. Das Schwenkschubgelenk (131) bewirkt damit eine Umsetzung einer gleichförmigen Bewegung des Zahnstangengetriebes (81) in eine ungleichförmige Schwenkbewegung des jeweiligen Greifelements (31; 61).

Bei beispielsweise konstanter Drehzahl des Antriebselements (82) ergeben sich bei diesem Greifeinheitsmodul (10) in den Endlagen der Schwenkbewegungen die niedrigsten Winkelgeschwindigkeiten dieser Schwenkbewegungen. Der Gradient (δx/δα) aus einer Hubeinheit (Δx/T) des Translationselements (111; 121) und der vom Greifelement (31; 61) überstrichene Schwenkwinkeleinheit (Δα/T) nimmt sowohl zu der geschlossenen Endlage (32) als auch zu der offenen Endlage des einzelnen Greifelements (31; 61) hin zu. Hierbei ist (T) eine Zeiteinheit, (Δx) der von dem Translationselement (111; 121) zurückgelegte Weg und (Δα) der vom Greifelement (31; 61) zurückgelegte Schwenkwinkel. Damit steigt die Positioniergenauigkeit des Greifeinheitsmoduls (10) von einer mittleren Schwenklage der Greifelemente (3, 61), z.B. bei einem Öffnungswinkel von 90 Grad zu der in der Figur 1 dargestellten geschlossenen Endlage (32) hin an. Dies ermöglicht beispielsweise auch ein genaues Vermessen eines mittels des Greifeinheitsmoduls (10) gegriffenen Werkstücks.

Bei z.B. konstanter Hubgeschwindigkeit der Zahnstangen (111, 121) erreicht das einzelne Greifelement (31; 61) in diesem Ausführungsbeispiel seine höchste Winkelgeschwindigkeit bei der Lage der geringsten Positioniergenauigkeit. In dieser Lage ist der Abstand des Mitnahmezapfens (114),von der Schwenkachse (35; 65) minimal. Dieser Abstand nimmt in diesem Ausführungsbeispiel beim Schwenken des einzelnen Greifelements (31; 61) in Richtung jeder der beiden Endlagen der Schwenkbewegung zu.

Bei der Auslegung des Schwenkschubgelenks (131) dieses Ausführungsbeispiels ist das innere Nutende (52) der Führungsnut (52) so auszulegen, dass sein Abstand zur Schwenkachse (35; 65) maximal dem Wert eines Quotienten entspricht.

Der Zähler dieses Quotienten wird gebildet aus dem Produkt des maximalen Abstandes des Mitnahmezapfens (114) zur Schwenkachse (35; 65) und dem Cosinus des Winkels zwischen der Geraden des maximalen Abstands und einer Normalenebene zur Längsrichtung (5). Der Nenner ist der Cosinus des maximalen Schwenkwinkels des jeweiligen Greifelements (31; 61).

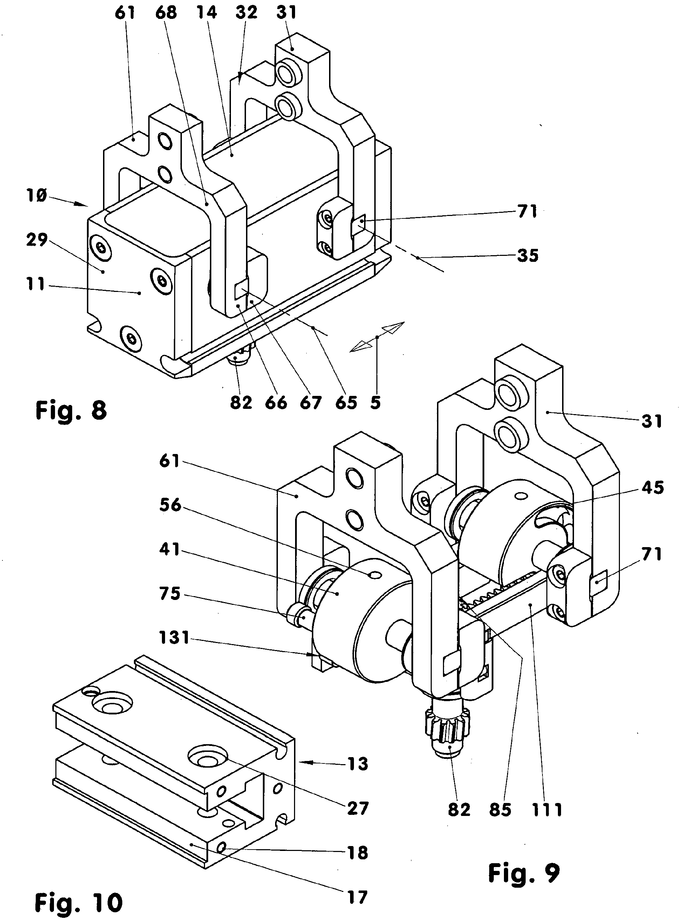

Die Figuren 8 - 15 zeigen ein weiteres Ausführungsbeispiel eines Greifeinheitsmoduls (10). Dieses Greifeinheitsmodul (10) hat ein geschlossenes Gehäuse (11) und teilweise außenliegende Greifelemente (31; 61).

Das Gehäuse (11) umfasst in diesem Ausführungsbeispiel ein Gehäusegrundteil (13), zwei an diesem befestigte Stirnwände (29) und einen Gehäusedeckel (14). Das Gehäusegrundteil (13), vgl. Figur 10, ist weitgehend so ausgebildet wie das im Zusammenhang mit dem ersten Ausführungsbeispiel beschrieben Gehäusegrundteil (13). Stirnseitig hat es z.B. jeweils drei Gewindebohrungen (18) für Befestigungsschrauben zur Befestigung der Stirnwände (29). Weiterhin sind die Schwenklagerdurchbrüche (27) angesenkt.

Das einzelne Greifelement (31; 61) ist mehrteilig ausgebildet. Es hat eine Greifelementscheibe (41), die mittels einer Schwenklagerwelle (71) im Gehäuse (11) z.B. gleitgelagert ist. Die aus dem Gehäuse (11) herausstehenden Enden der einzelnen Schwenklagerwelle (71) tragen einen Greifelementbügel (66), der mit jeweils einer Haltekappe (67) beidseitig an der Schwenklagerwelle (71) gehalten ist. Die beiden Greifelemente (31; 61) sind auch in diesem Ausführungsbeispiel identisch zueinander ausgebildet.

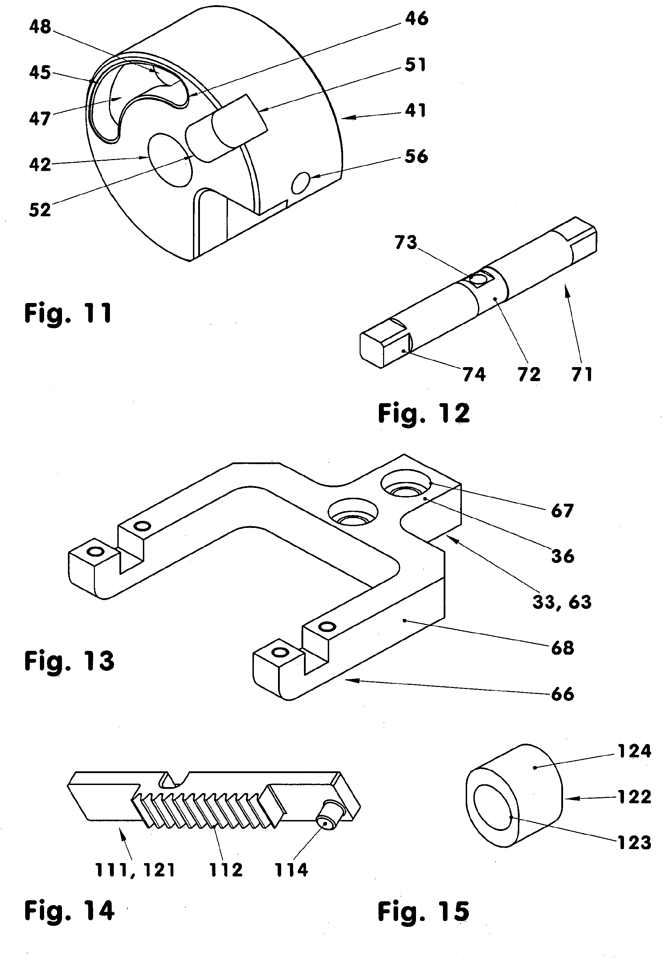

Die Figur 11 zeigt eine Greifelementscheibe (41). Diese hat eine zentrale Schwenkbolzenaufnahme (42), eine Mitnahmenut (51) und eine Anschlagnut (45), die so angeordnet sind wie bei der Greifelementscheibe (41) des in der Figur 6 dargestellten Greifelements (31; 61). In diesem Ausführungsbeispiel ist die Mitnahmenut (51) z.B. um 16 % breiter ausgebildet als in der Darstellung der Figur 6. Weiterhin hat die Greifelementscheibe (41) eine radial orientierte Fixierelementbohrung (56). Durch diese Fixierelementbohrung (56) hindurch ist die Greifelementscheibe (41) z.B. mittels eines Fixierstiftes auf der Schwenklagerwelle (71) befestigt, vgl. Figur 9.

Die in der Figur 12 dargestellte Schwenklagerwelle (71) hat eine zylindrische Hüllkontur. Mittig hat sie eine Einschnürung (72), in der eine Fixierstiftbohrung (73) die Schwenklagerwelle (71) in radialer Richtung durchdringt. Die beiden Enden sind als Vierkante (74) mit quadratischem Querschnitt ausgebildet.

In der Figur 13 ist ein Greifelementbügel (66) dargestellt. Dieser übergreift mit zwei U-förmig angeordneten Schwenkarmen (68) das Gehäuse (11). Im Scheitelbereich des U ist ein Greifbackenhalter (33; 63) z.B. angeformt. Dieser ist beispielsweise so ausgebildet, wie im Zusammenhang mit dem ersten Ausführungsbeispiel beschrieben. Die beiden Greifelementbügel (66) des Greifeinheitsmoduls (10) sind beispielsweise identisch ausgebildet. Es ist jedoch denkbar, die beiden Greifelementbügel (66) unterschiedlich zu gestalten.

Die Figur 14 zeigt eine Zahnstange (111; 121) des in der Figuren 8 und 9 dargestellten Greifeinheitsmoduls (10). Diese Zahnstange (111; 121) hat nur einen zylindrisch ausgebildeten Mitnehmerzapfen (114). Sein Durchmesser beträgt beispielsweise 83 % des ersten Mitnahmezapfens (114) der in der Figur 5 dargestellten Zahnstange (111; 121). Die Verzahnungen (112) der in den Figuren 5 und 14 dargestellten Zahnstangen (111; 121) sind beispielsweise identisch ausgebildet.

In der Figur 15 ist ein Kulissenstein (122) dargestellt. Dieser hat im Ausführungsbeispiel eine ovale Grundfläche mit einer zentralen Bohrung (123). Seine Länge ist beispielsweise um 30 % größer als die Breite. Die Mantelfläche (124) ist kantenfrei ausgebildet. Bei zusammengebautem Greifeinheitsmodul (10) sitzt der Kulissenstein (122) schwenkbar auf dem Mitnehmerzapfen (114) und ist in der Mitnahmenut (51) geführt. Der Kulissenstein (122) ist damit ein Bauteil des Schwenkschubgelenks (131). Er ist hierbei Teil des mehrteiligen Vollprismas (114, 122).

Die Antriebswelle (82), die Magnethalter (118), etc. dieses Ausführungsbeispiels sind so ausgebildet wie die im Zusammenhang mit dem ersten Ausführungsbeispiel beschriebenen Bauteile.

Beim Zusammenbau dieses Greifeinheitsmoduls (10) werden beispielsweise sämtliche Bewegungsfugen mittels zusätzlicher Dichtelemente abgedichtet. Das geschlossene Gehäuse (11) verhindert ein Eindringen von Verschmutzungen.

Das Öffnen und Schließen der Greifelemente (31, 61) erfolgt in diesem Ausführungsbeispiel, wie oben beschrieben. Auch in diesem Ausführungsbeispiel kann der maximale Öffnungswinkel des Greifeinheitsmoduls (10) beispielsweise mittels einer Anschlagschraube (75) oder mittels zweier Anschlagschrauben (75) begrenzt werden.

Die Figuren 16 und 17 zeigen ein Greifeinheitsmodul (10) mit einem daran angeschlossenen Antriebsmodul (150). Hierbei zeigt die Figur 17 diese Vorrichtung ohne die Gehäuse (11, 151). Das Greifeinheitsmodul (10) ist weitgehend so ausgebildet, wie im Zusammenhang mit dem ersten Ausführungsbeispiel beschrieben. Das jeweils eine Zahnstange (111; 121) und ein Greifelement (31; 61) verbindende Schwenkschubgelenk (131) weist einen Kulissenstein (122) auf.

Das Antriebsmodul (150) hat eine Energieversorgung (152) und eine Motoransteuerung (153), die mit einem Elektromotor (154) verbunden ist. Dieser Elektromotor (154) treibt mittels eines mehrstufigen Stirnradgetriebes (155) eine Schneckenwelle (156) an. Die Schneckenwelle (156) kämmt mit der Schrägverzahnung (83) der Antriebswelle (82). Je nach Drehrichtung des Elektromotors (154) wird die Antriebswelle (82) im Uhrzeigersinn oder gegen den Uhrzeigersinn gedreht. Hierbei wird die Drehbewegung des Elektromotors (154) in starrer Übersetzung in die Linearbewegungen der Zahnstangen (111; 121) übertragen. Auch Drehzahländerungen des Elektromotors (154) werden proportional auf die Antriebswelle (82) und über diese auf die Zahnstangen (111, 121) übertragen. Die Übertragung der Linearbewegungen der Zahnstangen (111, 121) auf die Schwenkbewegung der Greifelemente (31, 61) ist auch in diesem Ausführungsbeispiel nichtlinear.

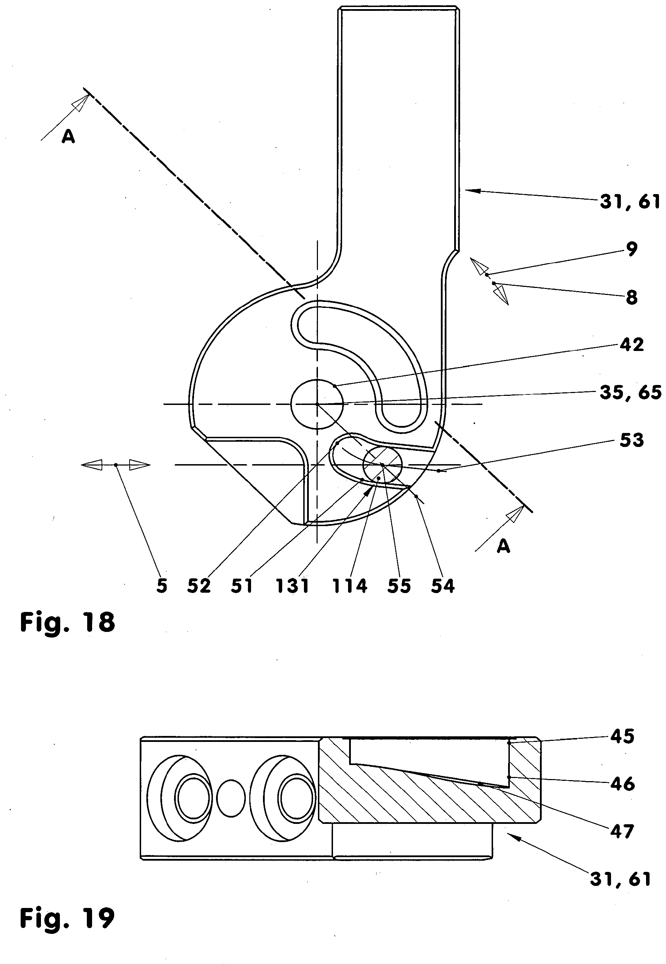

Die Figuren 18 und 19 zeigen eine Variante des in der Figur 6 dargestellten Greifelements (31; 61) mit eingesetztem Mitnahmezapfen (114). Die Mitnahmenut (51) der Greifelementscheibe (41) ist gebogen ausgebildet. Beispielsweise schließt die Mittellinie (53) der Mitnahmenut (51) an der Mantelfläche (43) der Greifelementscheibe (41) mit einer Radiallinie zur Schwenkachse (35; 65) durch diesen Schnittpunkt einen Winkel von 26 Grad ein. Dieser Winkel ist - ausgehend von der Radiallinie - in der Schließschwenkrichtung (9) orientiert. Das innere Nutende (52) der Mitnahmenut (51) ist beispielsweise um zwei Drittel der Nutbreite parallel zu dieser Radiallinie in der Öffnungsschwenkrichtung (8) versetzt. Der Abstand des inneren Nutendes (52) von der Schwenkachse (35; 65) entspricht dem im Zusammenhang mit dem ersten Ausführungsbeispiel genannten Abstand. In diesem Ausführungsbeispiel ist kein Abschnitt der Mittellinie (53) der Mitnahmenut (51) in irgendeinem Teilbereich des Schwenkwinkelbereichs parallel zur Längsrichtung (5) orientiert. Beispielsweise beträgt der minimale, von der Mittellinie (53) und der Längsrichtung (5) eingeschlossene Winkel sechs Grad. Auch eine andere Gestaltung, der Mitnahmenut (51) ist denkbar.

Der Mitnahmezapfen (114) der Zahnstange (111; 121) ist in diesem Ausführungsbeispiel zylindrisch ausgebildet. Während des Hubes der Zahnstange (111; 121) verfährt dieser Mitnahmezapfen (114) in der Längsrichtung (5). Die Führung der Zahnstange (111; 121) im Gehäuse (11) verhindert ein Ausschwenken der Zahnstange, sodass der Mitnahmezapfen (114) nur translatorisch bewegt wird. Beim Verfahren des Mitnahmezapfens (114) in der Darstellung der Figur 18 nach links wird das Greifelement (31; 61) um die Schwenkachse (35; 65) in der Öffnungsschwenkrichtung (8) geschwenkt.

In diesem Ausführungsbeispiel hat der Gradient (δx/δα) in dem die geschlossene Endlage (32) aufweisenden Teilschwenkwinkelbereich sein Maximum. In dem in der Figur 18 dargestellten Ausführungsbeispiel ist der Gradient (δx/δα) in dem die geschlossene Endlage (32) umfassenden Teilschwenkwinkelbereich um 60 % größer als in dem in den Figuren 1 - 17 dargestellten Ausführungsbeispielen. Der Gradient (δx/δα) ist in diesem Ausführungsbeispiel an der geschlossenen Endlage (32) beispielsweise doppelt so groß wie in einem an die geöffnete Endlage aufweisenden Teilschwenkwinkelbereich. In einer geöffneten Endlage, in der das Greifelement (31, 61) um einen Winkel von 90 Grad relativ zur geöffneten Endlage (32) geschwenkt ist, beträgt der Gradient (δx/δα) des in der Figur 18 dargestellten Ausführungsbeispiels 81 % des Gradienten (δx/δα) des in den Figuren 1 - 7 gezeigten Ausführungsbeispiels. Die Positioniergenauigkeit in der geöffneten Endlage ist damit in diesem Ausführungsbeispiel geringer als in dem in den Figuren 1 - 17 dargestellten Ausführungsbeispielen.

Der minimale Abstand des Mitnahmezapfens (114) von der Schwenkachse (35; 65) - und damit die höchste Winkelgeschwindigkeit - wird in diesem Ausführungsbeispiel bei einem Schwenkwinkel von 33 Grad aus der geschlossenen Endlage (32) erreicht. Damit kann in diesem Ausführungsbeispiel in dem die geschlossene Endlage (32) aufweisenden Teilschwenkwinkelbereich eine gegenüber den ersten Ausführungsbeispielen erhöhte Positioniergenauigkeit erreicht werden.

In diesem Ausführungsbeispiel, wie auch in den vorbeschriebenen Ausführungsbeispielen, gibt es für jeden momentanen Schwenkwinkel des Greifelements (31; 61) einen Schnittpunkt (55) der Mittellinie (53) der Mitnahmenut (51) mit einer in der Längsrichtung (5) orientierten Gerade durch das Mitnahmeelement (114). Für diesen Schnittpunkt (55) gilt, dass der in Richtung des anderen Greifelements (61; 31) orientierte Winkel zwischen einer Tangente an die Mittellinie (53) und der Längsrichtung (5) in diesem Schnittpunkt (55) größer als Null ist und kleiner oder gleich dem Winkel zwischen einer Radialen (54) durch die Schwenkachse (35; 65) in diesem Schnittpunkt (55) und der Längsrichtung (5) ist.

Die in der Figur 19 gezeigte Schnittdarstellung zeigt eine stufenlos ausgebildete Anschlagnut (45). Der Nutgrund (47) ist absatzfrei stetig ausgebildet. Gegebenenfalls kann die Anschlagschraube (75) einen entlang der Anschlagnut (45) verschiebbaren Nutenstein führen. Die Steigung der Bodenfläche dieses Nutensteins entspricht dann beispielsweise der Steigung des Nutgrunds (47).

Die in den Figuren 18 und 19 dargestellten Greifelemente (31; 61) und/oder deren Greifelementscheiben (41) können in den Greifeinheitsmodulen (10) der anderen Ausführungsbeispiele eingesetzt werden. Beispielsweise sind sie austauschbar ausgebildet. Es ist auch denkbar, in einem Greifeinheitsmodul (10) z.B. wegen eines beengten Bauraums, zwei verschieden ausgebildete Greifelemente (31; 61) oder Greifelementscheiben (41) einzusetzen.

Auch Kombinationen der einzelnen Ausführungsbeispiele sind denkbar.

### Bezugszeichenliste:

- 5: Längsrichtung
- 6: Höhenrichtung
- 7: Breitenrichtung
- 8: Öffnungsschwenkrichtung
- 9: Schließschwenkrichtung

- 10: Greifeinheitsmodul
- 11: Gehäuse
- 12: Gehäuseunterseite
- 13: Gehäusegrundteil
- 14: Gehäusedeckel
- 15: Grundplatte
- 16: Seitenplatten
- 17: Oberseite
- 18: Gewindebohrungen
- 19: Aufnahmenut

- 21: Durchgangsbohrung
- 22: Befestigungsbohrungen
- 23: Zentriereinsenkungen
- 24: Langlöcher
- 25: Innenwandung
- 26: Führungsnut
- 27: Schwenklagerdurchbrüche
- 28: Gewindedurchbruch
- 29: Stirnwände

- 31: Greifelement
- 32: geschlossene Endlage
- 33: Greifbackenhalter

- 35: Schwenkachse
- 36: Befestigungsseite
- 37: Querbohrungen

- 41: Greifelementscheibe
- 42: Schwenkbolzenaufnahme
- 43: Mantelfläche
- 44: Lagerbuchse
- 45: Anschlagnut
- 46: Ende von (45)
- 47: Nutgrund von (45)
- 48: Nutabsatz
- 49: Zahnstangenaussparung

- 51: Hohlprisma, Mitnahmenut
- 52: inneres Nutende
- 53: Mittellinie von (51)
- 54: Radiale zu (35; 65)
- 55: Schnittpunkt zwischen (53) und (5) in (114)

- 56: Fixierelementbohrung

- 61: Greifelement
- 63: Greifbackenhalter
- 65: Schwenkachse
- 66: Greifelementbügel
- 67: Haltekappe
- 68: Schwenkarme

- 71: Schwenklagerwelle, Schwenklagerbolzen
- 72: Einschnürung
- 73: Fixierstiftbohrung
- 74: Vierkante
- 75: Anschlagschraube
- 76: Abdeckscheibe
- 77: Aufnahmenut
- 78: Zahnstangenausnehmung
- 79: Durchgangsbohrung

- 80: Getriebe
- 81: Zahnstangengetriebe
- 82: Antriebselement, Antriebswelle
- 83: Schrägverzahnung
- 84: Sensor
- 85: Ritzel
- 86: Drehachse
- 87: Aufnahmebund
- 88: Auflagebund
- 89: Bundflächen

- 91: Führungsbund
- 92: Freistich
- 93: Gradverzahnung

- 111: Translationselement, Zahnstange,
- 112: Verzahnung
- 113: Zähne
- 114: Vollprisma, Mitnahmezapfen, Teil eines Vollprismas (114, 122)
- 115: Mitnahmezapfen
- 116: Unterseite
- 117: Aussparung
- 118: Magnethalter
- 119: Magnete

- 121: Translationselement, Zahnstange
- 122: Kulissenstein, Teil eines Vollprismas (114, 122)
- 123: Bohrung in (122)
- 124: Mantelfläche
- 126: Öffnungshubrichtung von (111)
- 127: Schließhubrichtung von (111)
- 128: Öffnungshubrichtung von (121)
- 129: Schließhubrichtung von (121)

- 131: Schwenkschubgelenk

- 150: Antriebsmodul
- 151: Gehäuse
- 152: Energieversorgung
- 153: Motoransteuerung
- 154: Elektromotor
- 155: Stirnradgetriebe
- 156: Schneckenwelle

- T: Zeiteinheit
- x: Hub von (111; 121)
- α: Schwenkwinkel von (31; 61)

## Patentansprüche

1. Greifeinheitsmodul (10) mit zwei jeweils um eine Schwenkachse (35; 65) schwenkbar gelagerten, mittels eines antreibbaren Getriebes (80) gekoppelten Greifelementen (31, 61), wobei die Schwenkachsen (35, 65) parallel zueinander liegen,
- wobei das Getriebe (80) ein rotatorisches Antriebselement (82) mit in Bezug auf die Schwenkachsen (35, 65) ortsfester Drehachse (86) und zwei mit dem Antriebselement (82) in starrem Übersetzungsverhältnis gekoppelte, in einander entgegengesetzte Hubrichtungen (126, 128; 127, 129) linear bewegbare Translationselemente (111, 121) aufweist,
- wobei die Translationselemente (111, 121) parallel zu normal zu den Schwenkachsen (35, 65) liegenden Schwenkebenen beider Greifelemente (31, 61) verfahrbar sind,
- wobei jeweils ein Translationselement (111; 121) und jeweils ein Greifelement (31; 61) zumindest mittels eines Schwenkschubgelenks (131) verbunden ist,
- wobei das Getriebe (80) ein Zahnstangengetriebe (81) aufweist, dessen Antriebselement (82) eine Antriebswelle (82) mit einem Ritzel (85) ist und dessen Translationselemente (111; 121) mit dem Ritzel (85) kämmende Zahnstangen (111; 121) sind,
- wobei das einzelne Schwenkschubgelenk (131) zumindest durch ein Hohlprisma (51) eines Greifelements (31; 61) und einem darin geführten Vollprisma (114; 114, 122) einer Zahnstange (111; 121) gebildet wird und
- wobei das Vollprisma (114, 122) einen Mitnahmezapfen (114) aufweist, der in die gleiche Richtung wie die Verzahnung (112) der Zahnstange (111; 121) orientiert ist.

2. Greifeinheitsmodul (10) nach Anspruch 1, **dadurch gekennzeichnet, dass** der Mitnahmezapfen (114) einen relativ zum Translationselement (111; 121) schwenkbar gelagerten Kulissenstein (122) trägt.

3. Greifeinheitsmodul (10) nach Anspruch 1, **dadurch gekennzeichnet, dass** jedes Greifelement (31; 61) innerhalb eines durch eine geschlossene Endlage (32) und eine offene Endlage begrenzten Schwenkwinkelbereich schwenkbar ist, wobei in der geschlossenen Endlage (32) das Vollprisma (114; 114, 122) den größten Abstand zur Schwenkachse (35; 65) hat, sodass der Gradient (δx/δα) aus einer Hubeinheit (Δx/T) des Translationselements (111; 121) und einer Schwenkwinkeleinheit (Δα/T) des mit diesem gekoppelten Greifelements (31; 61) in dem die geschlossene Endlage (32) umfassenden Schwenkwinkelteilbereich ein Maximum aufweist.

4. Greifeinheitsmodul (10) nach Anspruch 3, **dadurch gekennzeichnet, dass** außerhalb der geschlossenen Endlage (32) des einzelnen Greifelements (31; 61) das Vollprisma (114; 114, 122) seinen kleinsten Abstand zur Schwenkachse (35; 65) hat, sodass der Gradient (δx/δα) ein Minimum erreicht.

5. Greifeinheitsmodul (10) nach Anspruch 1, **dadurch gekennzeichnet, dass** der maximale Schwenkwinkelbereich mindestens eines Greifelements (31; 61) begrenzbar ist.

6. Greifeinheitsmodul (10) nach Anspruch 5, **dadurch gekennzeichnet, dass** der maximale Schwenkwinkelbereich stufenlos zwischen 10 Grad und 90 Grad einstellbar ist.

7. Greifeinheitsmodul (10) nach Anspruch 1, **dadurch gekennzeichnet, dass** das Ritzel (85) mit einem Antriebsmodul (150) gekoppelt ist.

8. Greifeinheitsmodul (10) nach Anspruch 7, **dadurch gekennzeichnet, dass** das Antriebsmodul (150) einen Elektromotor (154) aufweist.

## Claims

1. A gripper module (10) having two gripping elements (31, 61), which are each mounted pivotably about a pivot axis (35; 65) and are coupled by means of a drivable gearing system (80), wherein the pivot axes (35, 65) are parallel to one another,
- wherein the gearing system (80) has a rotary drive element (82) with a rotational axis (86) that is stationary in relation to the pivot axes (35, 65), and two translation elements (111, 121), which are coupled to the drive element (82) in a fixed gear ratio and are linearly movable in mutually opposing stroke directions (126, 128; 127, 129),
- wherein the translation elements (111, 121) are movable parallel to pivot planes, lying normally to the pivot axes (35, 65), of both gripping elements (31, 61),
- wherein in each case one translation element (111; 121) and in each case one gripping element (31; 61) is connected at least by means of a pivoting sliding joint (131),
- wherein the gearing system (80) has a rack and pinion gear (81), the drive element (82) of which is a drive shaft (82) with a pinion (85), and the translation elements (111; 121) of which are toothed racks (111; 121) that mesh with the pinion (85),
- wherein the individual pivoting sliding joint (131) is formed at least by a hollow prism (51) of a gripping element (31; 61) and a solid prism (114; 114, 122), guided therein, of a toothed rack (111; 121), and
- wherein the solid prism (114, 122) has a catch pin (114), which is oriented in the same direction as the teeth (112) of the toothed rack (111; 121).

2. The gripper module (10) according to Claim 1, **characterised in that** the catch pin (114) bears a link block (122), which is mounted pivotably relative to the translation element (111; 121).

3. The gripper module (10) according to Claim 1, **characterised in that** each gripping element (31; 61) is pivotable within a pivot angle range limited by a closed end position (32) and an open end position, wherein in the closed end position (32), the solid prism (114; 114, 122) is at the greatest distance from the pivot axis (35; 65), so that the gradient (δx/δα) of a stroke unit (Δx/T) of the translation element (111; 121) and a pivot angle unit (Δα/T) of the gripping element (31; 61) coupled thereto has a maximum in the pivot angle part-range including the closed end position (32).

4. The gripper module (10) according to Claim 3, **characterised in that**, outside the closed end position (32) of the individual gripping element (31; 61), the solid prism (114; 114, 122) is at its smallest distance from the pivot axis (35; 65), so that the gradient (δx/δα) reaches a minimum.

5. The gripper module (10) according to Claim 1, **characterised in that** the maximum pivot angle range of at least one gripping element (31; 61) can be limited.

6. The gripper module (10) according to Claim 5, **characterised in that** the maximum pivot angle range is infinitely variable between 10 degrees and 90 degrees.

7. The gripper module (10) according to Claim 1, **characterised in that** the pinion (85) is coupled to a drive module (150).

8. The gripper module (10) according to Claim 7, **characterised in that** the drive module (150) has an electric motor (154).

## Revendications

1. Module d'unité de préhension (10), pourvu de deux éléments de préhension (31, 61), accouplés au moyen d'une transmission (80) susceptible d'être entraînée, dont chacun est logé en étant pivotant autour d'un axe de pivotement (35 ; 65), les axes de pivotement (35, 65) se situant à la parallèle l'un de l'autre,
- la transmission (80) comportant un élément d'entraînement (82) rotatoire, pourvu d'un axe de rotation (86) stationnaire en rapport aux axes de pivotement (35, 65) et deux éléments de translation (111, 121) accouplés en rapport de démultiplication rigide avec l'élément d'entraînement (82), mobiles de manière linéaire dans des directions de course (126, 128 ; 127, 129) mutuellement opposées,
- les éléments de translation (111, 121) étant déplaçables à la parallèle de plans de pivotement des deux éléments de préhension (31, 61), situés à la normale des axes de pivotement (35, 65),
- chaque fois un élément de translation (111 ; 121) et chaque fois un élément de préhension (31 ; 61) étant assemblés au moins au moyen d'une glissière pivotante (131),
- la transmission (80) comportant un engrenage à crémaillère (81) dont l'élément d'entraînement (82) est un arbre d'entraînement (82) pourvu d'un pignon (85) et dont les éléments de translation (111 ; 121) sont des crémaillères (111 ; 121) s'engrenant avec le pignon (85),
- la glissière pivotante (131) individuelle étant constituée d'au moins un prisme creux (51) d'un élément de préhension (31 ; 61) et d'un prisme plein (114 ; 114, 122) d'une crémaillère (111 ; 121) guidé dans celui-ci et
- le prisme plein (114, 122) comportant un ergot d'entraînement (114) qui est orienté dans la même direction que la denture (112) de la crémaillère (111 ; 121).

2. Module d'unité de préhension (10) selon la revendication 1, **caractérisé en ce que** l'ergot d'entraînement (114) comporte un coulisseau (122) logé en pivotement par rapport à l'élément de translation (111 ; 121).

3. Module d'unité de préhension (10) selon la revendication 1, **caractérisé en ce que** chaque élément de préhension (31 ; 61) est susceptible de pivoter à l'intérieur d'une plage d'angle de pivotement délimitée par une position extrême (32) fermée et une position extrême ouverte, dans la position extrême (32) fermée, le prisme plein (114 ; 114, 122) présentant le plus grand écart par rapport à l'axe de pivotement (35 ; 65), de sorte que le gradient (δx/δα) d'une unité de course (Δx/T) de l'élément de translation (111 ; 121) et d'une unité d'angle de pivotement (Δα/T) de l'élément de préhension (31 ; 61) accouplé avec celui-ci présente un maximum dans la plage partielle d'angle de pivotement comprenant la position extrême (32).

4. Module d'unité de préhension (10) selon la revendication 3, **caractérisé en ce qu'**à l'extérieur de la position extrême (32) fermée de l'élément de préhension (31 ; 61) individuel, le prisme plein (114 ; 114, 122) présente son plus petit axe de pivotement (35 ; 65), de telle sorte que le gradient (δx/δα) atteigne un minimum.

5. Module d'unité de préhension (10) selon la revendication 1, **caractérisé en ce que** la plage d'angle de pivotement maximale d'au moins un élément de préhension (31 ; 61) peut être limitée.

6. Module d'unité de préhension (10) selon la revendication 5, **caractérisé en ce que** la plage d'angle de pivotement maximale est réglable en continu entre 10 degrés et 90 degrés.

7. Module d'unité de préhension (10) selon la revendication 1, **caractérisé en ce que** le pignon (85) est accouplé avec un module d'entraînement (150).

8. Module d'unité de préhension (10) selon la revendication 7, **caractérisé en ce que** le module d'entraînement (150) comporte un moteur électrique (154).
